Europäisches Patentamt

European Patent Office

Office européen des brevets

(19)

(11) Publication number: **0 036 516**
**B1**

(12)                **EUROPEAN PATENT SPECIFICATION**

(45) Date of publication of patent specification: **06.06.84**

(21) Application number: **81101511.4**

(22) Date of filing: **03.03.81**

(51) Int. Cl.³: **B 23 D  59/02,**
**B 23 D  45/16,**
**B 23 Q  11/10, B 27 B  5/14,**
**B 28 D  1/04**

(54) A circular saw of centreless type.

(30) Priority: **25.03.80 SE 8002265**
**14.10.80 SE 8007185**

(43) Date of publication of application:
**30.09.81 Bulletin 81/39**

(45) Publication of the grant of the patent:
**06.06.84 Bulletin 84/23**

(84) Designated Contracting States:
**AT BE CH DE FR GB IT LI LU NL SE**

(56) References cited:
**DE - C - 1 113 173**
**US - A - 1 395 101**
**US - A - 2 748 810**
**US - A - 2 912 968**
**US - A - 2 972 363**
**US - A - 3 135 304**
**US - A - 3 621 896**
**US - A - 3 930 310**

(73) Proprietor: **Johansson, Mats Ake**
**Ekliden 6**
**S-667 00 Forshaga (SE)**

(72) Inventor: **Johansson, Mats Ake**
**Ekliden 6**
**S-667 00 Forshaga (SE)**

(74) Representative: **Hynell, Magnus**
**Hynell Patenttjänst AB Box 236**
**S-683 02 Hagfors (SE)**

Courier Press, Leamington Spa, England.

## Description

### Field of invention

This invention relates to a circular saw of centreless type with a sawing depth greater than the radius of the circle, comprising an annular blade, at least one planar member provided inside the annular blade, and mounting means provided to hold the planar member in a rear part of said planar member. More particularly does the invention relate to the problem of introducing a fluid, e.g. a coolant and/or a flushing agent into the kerf produced by the saw blade.

### Background art

That which primarily characterizes annular saws as disclosed e.g. in US—A—2 972 363 is that they lack a central shaft as a result of which the sawing depth is greater than the radius of the circle. Portable sawing machines have been developed for sawing up to a sawing depth of about 30 cm. Examples of use are in fire protection for sawing through roofs, walls and floors regardless of whether there are nails or other iron objects; sawing into motor-car bodies and other sheet-metal and iron constructions; sawing concrete pipes, sawing up asphalt, making holes in concrete and light-weight concrete walls and so on.

A problem which is encountered when sawing in objects and materials of the above mentioned kind has to do with the extensive generation of heat. Another problem concerns the removal of saw dust and other particles from the kerf produced by the saw blade. The problems concerned with the generation of heat, which have been recognized also in the past as disclosed e.g. in US—A—3 930 310, and also the problems concerned with the removal of sawdust from the kerf, may arise also for conventional circular saws but they are pronounced in the present field not only because of the heavy duty of the saw but also of the fact that the kerf may be made deeper than by conventional circular saws of the same dimensions and therefore not readily accessible for introduction of fluids by conventional means.

Heating also occurs with chain saws, particularly when hard materials are to be cut, such as described in US—A—2 912 968. The solution in this last-named specification is to provide the guide rail with a passage for flushing water for cooling the fine cutting points while simultaneously removing the ground-off rock dust. More particularly does the passage as described in the said specification terminate in the groove which as usual is provided in the periphery of the guide rail for guiding the chain. The outlet holes in the guide rail therefor are blocked by the chain running in the groove, a principle which is not useful when the sawing member is not a chain but an annular blade.

### Disclosure of invention

Now, therefore a primary object of the present invention is to bring about an improvement in this technical field with the aim at readily and efficiently introducing the fluid, e.g. a coolant or flushing agent, into the kerf produced by the saw blade.

Another object is to offer a centreless circular saw which is easy to manufacture and which is reliable in operation.

These and other objects which will be apparent from the following can be achieved in that said planar member contains at least one conduit or passage for a coolant or a flushing agent, that said conduit or passage has an inlet opening in the region of said rear part of the planar member, that there is provided a conduit to said inlet of the conduit or passage in the planar member for the supply of said coolant or flushing agent to said conduit or passage, that an open space is provided between the inner edge of the annular blade and the edge of the planar member in the region of the front part of said planar member, and that the conduit or passage in the planar member has at least one outlet for said coolant or flushing agent in the form of an outlet hole at least in said front part of the planar member which lies within the region of the maximum sawing depth, said outlet hole being directed towards said space such that said outlet hole is uncovered, i.e. open to said open space, wherein the coolant or flushing agent supplied through the said conduit or passage, when said outlet hole is in the region of the kerf produced by the saw blade, may be directly transported into said kerf for cooling the saw blade and/or for the removal of saw dust and other particles from the kerf.

According to a preferred embodiment the planar member consists of a laminated material comprising at least two united laminations. Herein the said passage may be obtained by a groove provided in one of the laminations prior to uniting the laminations. If the number of laminations is at least three, said passage may be obtained by means of a groove provided in an inner layer of such laminated material. If the number of laminations, however, is only two, said groove may be provided in one of the laminations in that surface which is faced to the other lamination.

The conduit or passage through the planar member can, however, be brought about also by other means than by means of a groove in a laminated material. For example, regardless the member is laminated or not, the conduit or passage may consist of a tube provided in a groove in the member, wherein the tube has an outer dimension in the direction perpendicular to the side surface of the planar member which is not greater than the depth of the groove. Further the conduit may be formed by means of a strip or a corresponding means covering a groove provided in one of the side surfaces of the planar member such that a passage is formed between the strip and the bottom of the groove.

The invention also relates to the mounting means provided to hold the central disc, wherein a conduit extends through the mounting means to supply said fluid to the conduit or passage extending through the planar member.

The device according to the invention can be combined with various means for mounting, guiding and driving the annular saw blade. It is very well possible to journal the annular saw blade by conventional means, as well as mounting the saw blade and driving it in combination with the device according to the invention.

Further aspects and features of the invention will be apparent from the following description of a preferred embodiment of the invention as well as from the appending claims.

Brief description of drawing

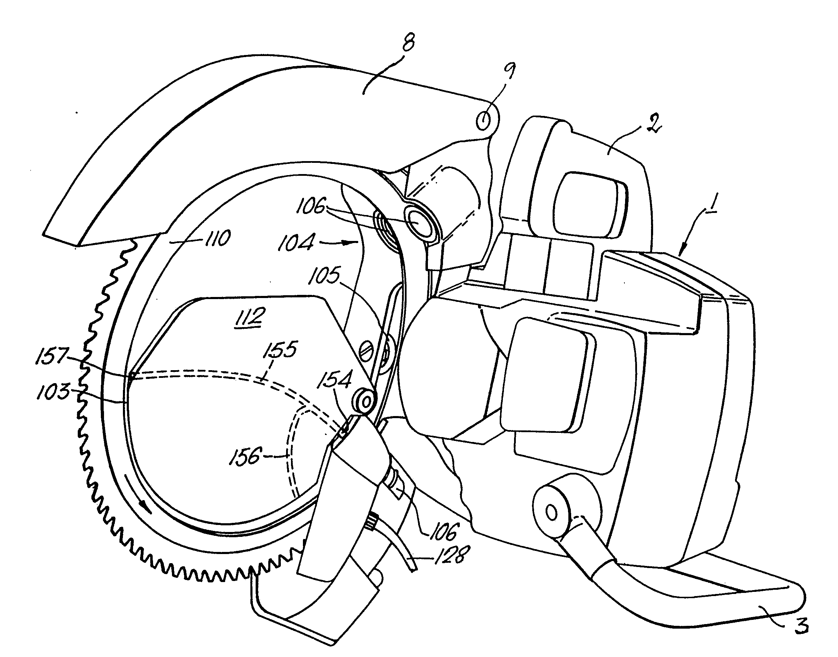

In the following description of a preferred embodiment of the invention, reference will be made to the accompanying drawing which is a perspective view of a sawing machine according to the preferred form of embodiment of the invention.

Description of preferred embodiment

In the drawing the motor housing 1 is provided with handles 2 and 3, a motor and power transmission means not shown, a blade holder 104 and a blade guard 8 pivotally mounted on the blade holder through a joint 9. The blade holder 104 holds an annular saw blade 110 between three pairs of rollers 105 and 106 in a manner known per se. The former rollers 105 are driving rollers and the other rollers 106 are supporting and guiding rollers.

The blade holder 104 also in a manner known per se holds a planar member 112 which is spaced away from the inner edge of the annular blade 110 by a narrow but open space 103. A water hose 128 is connected to the blade holder 104 and communicates via a conduit 154 with passages 155 and 156 provided in the planar member 112. The passage 155 extends from the rear part of the planar member 112 and between the blade holder and the outer or front edge of the planar member 112 and terminates in the outer edge of the planar member 112 approximately opposite to the blade holder 104, i.e. in the front part of the planar member, for the supply of cooling and flushing water to the saw kerf, while the passage 156 terminates in the edge of the disc just in front of the blade holder in order to flush away remaining saw dust such that it will not enter into the driving assembly. The discharge opening of the first mentioned passage 155 has been designated 157 and is facing the entry to the narrow space 103 between the planar member and the saw blade 110. When flushing liquid is supplied through the water hose 128, the conduit 154 and the passages 155 and 156, the liquid in the form of water jets will pass over the open space 103 between the planar member 112 and the saw blade in a direction towards the saw blade. When meeting the inner edge of the saw blade the water jets will be divided so that water will flow on both sides of the blade, including the saw teeth which may be equipped with diamonds, efficiently cooling it and flushing away from the kerf the material which has been sawn off.

## Claims

1. A circular saw of centreless type with a sawing depth greater than the radius of the circle, comprising an annular blade (110), at least one planar member (112) provided inside the annular blade, and mounting means (104) provided to hold the planar member at the rear part of said planar member characterised in that said planar member (112) contains at least one conduit or passage (155) for a coolant or a flushing agent, that said conduit or passage has an inlet opening in the region of said rear part of the planar member, that there is provided a conduit (154) to said inlet of the conduit or passage in the planar member for the supply of said coolant or flushing agent to said conduit or passage, that an open space (103) is provided between the inner edge of the annular blade (110) and the edge of the planar member in the region of the front part of said planar member, and that the conduit or passage in the planar member has at least one outlet for said coolant or flushing agent in the form of an outlet hole (157) at least in said front part of the planar member which lies within the region of the maximum sawing depth, said outlet hole being directed towards said space such that said outlet hole is uncovered, i.e. open to said open space, wherein the coolant or flushing agent supplied through the said conduit or passage, when said outlet hole is in the region of the kerf produced by the saw blade, may be directly transported into said kerf for cooling the saw blade and/or for the removal of saw dust and other particles from the kerf.

2. Device according to claim 1, characterised in that a conduit (106) extends through said mounting means (104) to said inlet in the planar member.

## Patentansprüche

1. Kreissäge vom achsenlosen Typ mit einer grösseren Sägetiefe als dem Kreisradius, bestehend aus einem ringförmigen Sägeblatt (110), mindestens einem innerhalb des ringförmigen Blatts angeordneten ebenen Element (112) und Befestigungsmitteln (104) zur Halterung des ebenen Elements an seinem rückwärtigen Teil, dadurch gekennzeichnet, dass dieses ebene Element (112) mindestens eine Leitung bzw. einen Durchgang (155) für ein Kühlmittel oder Spülmittel enthält, dass diese Leitung bzw.

dieser Durchgang im Bereich des besagten rückwärtigen Teils des ebenen Elements eine Einlassöffnung aufweist, dass zur Versorgung dieser Leitung bzw. dieses Durchgangs mit besagtem Kühlmittel oder Spülmittel eine Leitung (154) zu diesem Einlass der Leitung bzw. des Durchgangs in dem ebenen Element vorgesehen ist, dass zwischen der Innenkante des ringförmigen Blatts (110) und der Kante des ebenen Elements im Bereich von dessen Vorderteil ein Freiraum (103) angeordnet ist, und dass die Leitung bzw. der Durchgang in dem ebenen Element mindestens einen Auslass für dieses Kühlmittel oder Spülmittel in Form eines Auslasslochs (157) mindestens in jenem vorderen Teil des ebenen Elements aufweist, der innerhalb des Bereichs grösster Sägetiefe Liegt, wobei dieses Auslassloch so auf jenen Raum weist, dass es unbedeckt ist, d.h. zu diesem Freiraum hin offen ist, wobei das durch diese Leitung bzw. diesen Durchgang zugeführte Kühlmittel oder Spülmittel, wenn sich dieses Auslassloch im Bereich des durch das Sägeblatt erzeugten Sägeschlitzes befindet, zur Kühlung des Sägeblattes und/oder zur Entfernung von Sägemehl und sonstigen Teilchen aus dem Sägeschlitz direkt in diesen gefördert werden kann.

2. Vorrichtung nach Anspruch 1, dadurch gekennzeichnet, dass eine Leitung (106) durch jene Befestigungsmittel (104) hindurch zu diesem Einlass im ebenen Element verläuft.

## Revendications

1. Scie circulaire du type sans centre ayant une profondeur de sciage plus grande que le rayon du cercle, cette scie comprenant une lame annulaire (110), au moins un organe plan (112) prévu à l'intérieur de la lame annulaire, ainsi qu'un moyen de montage (104) prévu pour maintenir l'organe plan dans sa partie arrière, caractérisé en ce que l'organe plan (112) comporte au moins un conduit ou un passage (155) pour un réfrigérant ou un agent de balayage, ce conduit ou ce passage comporte une ouverture d'entrée dans la zone de la partie arrière de l'organe plan, on prévoit un conduit (154) allant à l'entrée du conduit ou du passage de l'organe plan pour acheminer le réfrigérant ou l'agent de balayage dans ce conduit ou ce passage, un espace ouvert (103) est prévu entre le bord intérieur de la lame annulaire (110) et le bord de l'organe plan dans la zone de la partie avant de ce dernier, tandis que le conduit ou le passage de l'organe plan comporte, pour le réfrigérant ou l'agent de balayage, au moins une sortie sous forme d'un trou de sortie (157) pratiqué au moins dans la partie avant de l'organe plan se situant dans les limites de la zone de la profondeur de sciage maximum, ce trou de sortie étant dirigé vers cet espace, de telle sorte qu'il soit découvert, c'est-à-dire ouvert vers cet espace, le réfrigérant ou l'agent de balayage acheminé par ce conduit ou ce passage, lorsque ce trou de sortie se situe dans la zone du trait de scie formé par la lame, pouvant être directement transporté dans le trait de scie pour refroidir la lame de scie et/ou pour enlever, du trait de scie, les poussières de sciage et d'autres particules.

2. Dispositif suivant la revendication 1, caractérisé en ce qu'un conduit (106) s'étend à travers le moyen de montage (104) jusqu'à l'entrée prévue dans l'organe plan.